# EUROPÄISCHE PATENTANMELDUNG

(11) **EP 0 842 625 A1**
(43) Veröffentlichungstag der Anmeldung: **20.05.1998**
(21) Anmeldenummer: 97115860.5
(22) Anmeldetag: 12.09.1997
(51) Int. Cl.: A47J 31/08

(54) **Filterpapiereinsatz**

(30) Priorität: 06.11.1996 DE 29619223 U
(71) Anmelder: MELITTA HAUSHALTSPRODUKTE GmbH & Co. Kommanditgesellschaft, D-32427 Minden (DE)
(72) Erfinder: Pahl, Klaus, 32547 Bad Oeynhausen (DE); Horn, Andrea, 32423 Minden (DE)
(74) Vertreter: Stracke, Alexander, Dipl.-Ing.

(57) **Zusammenfassung**

Gegenstand der Erfindung ist ein Filterpapiereinsatz (10) für ein Filtergefäß zur Herstellung von Aromaauszügen aus Kaffee oder Tee.

Ziel der Erfindung ist es, einen Filterpapiereinsatz (10) aufzuzeigen, der extrem preiswert herstellbar und im Gebrauch besonders einfach zu handhaben ist.

Dies wird gemäß vorliegender Erfindung dadurch erreicht, daß der Filterpapiereinsatz (10) aus einem im Grundriß rechteckigen Blatt (11) besteht.

Für die Herstellung des Filterpapiereinsatzes werden keinerlei Prägenähte benötigt und ein derartiger Filterpapiereinsatz (10) kann auch praktisch verlustfrei aus einer entsprechend großen Filterpapier-Bahn geschnitten werden.

## Beschreibung

Die vorliegende Erfindung betrifft einen Filterpapiereinsatz für ein Filtergefäß zur Herstellung von Aromaauszügen aus Kaffee oder Tee.

Ziel der Erfindung ist es, einen Filterpapiereinsatz aufzuzeigen, der extrem preiswert herstellbar und im Gebrauch besonders einfach zu handhaben ist.

Diese Aufgabe wird erfindungsgemäß dadurch gelöst, daß der Filterpapiereinsatz aus einem im Grundriß rechteckigen Blatt besteht.

Die Herstellung eines blattförmigen Filterpapiereinsatzes ist schon allein aufgrund der Tatsache, daß zu seiner Herstellung keine Prägenähte benötigt werden, äußerst kostengünstig.

Nun sind zwar grundsätzlich auch blattförmige Filterpapiereinsätze bekannt, allerdings haben diese bekannten blattförmigen Filterpapiereinsätze eine kreisrunde Grundfläche, so daß bei ihrer Herstellung entsprechend viel Verschnitt an Filterpapier anfällt.

Ein rechteckiger Filterpapiereinsatz hingegen kann praktisch verlustfrei aus einer entsprechend großen Filterpapier-Bahn geschnitten werden.

In der Handhabung ist ein derartiger Filterpapiereinsatz ebenfalls äußerst günstig, da dieser Filterpapiereinsatz lediglich in ein Filtergefäß eingelegt werden muß, welches entsprechend mit einer in ihrer Projektion rechteckigen Filterfläche ausgestattet ist.

Ein derartiges Filtergefäß kann beispielsweise eine rinnen- oder trogförmige Gestaltung aufweisen, wobei es dann vorteilhaft sein kann, wenn das Blatt in seinem Rand-bereich mit Arretierungsmitteln ausgestattet ist.

Diese Arretierungsmittel finden dann entsprechende Gegenstücke im Filtergefäß, so daß das lagegerechte Einsetzen oder Einlegen des Fiiterpapiereinsatzes in ein entsprechendes Filtergefäß ohne besondere Aufmerksamkeit des Benutzers sicher und einfach durchführbar ist.

Vorteilhatterweise kann als Arretierungsmittel mindestens ein Durchbruch vorgesehen sein.

In diesem Falle wäre das Filtergefäß mit einem entsprechend dem Durchbruch dimensionierten Arretierungsnocken auszustatten.

Der Filterpapierreinsatz kann nach einem weiteren Ausführungsbeispiel der Erfindung als Arretierungsmittel mindestens eine über den Seitenrandbereich hinaus vor-stehende Lasche aufweisen.

Hier wäre das Filtergefäß mit einer entsprechenden Ausnehmung zur Aufnahme der Lasche des Filterpapiereinsatzes auszustatten.

Schließlich ist es auch denkbar, daß als Arretierungsmittel mindestens eine im Seitenrandbereich angebrachte Aussparung vorgesehen ist.

Ein derart gestalteter Filterpapiereinsatz würde ein Filtergefäß bedingen, welches mit einem entsprechenden Arretierungsnocken versehen ist.

Ausführungsbeispiele der Erfindung sind in den beigefügten Zeichnungen dargestellt und werden im folgenden näher beschrieben.

Es zeigen:
- Figur 1: eine Draufsicht auf einen flachliegenden Filterpapiereinsatz gemäß vorliegender Erfindung,
- Figur 2: eine Draufsicht auf einen flachliegenden Filterpapiereinsatz nach einem weiteren Ausführungsbeispiel der Erfindung,
- Figur 3: eine Draufsicht auf einen Filterpapiereinsatz nach einem weiteren Ausführungsbeispiel der Erfindung,
- Figur 4: eine perspektivische Darstellung einer aus einem Filtergefäß und einem Filterpapiereinsatz gemäß Figur 1 bestehenden Filtereinrichtung,
- Figur 5: eine perspektivische Darstellung einer aus einem Filtergefäß und einem Filterpapiereinsatz gemäß Figur 2 bestehenden Filtereinrichtung.

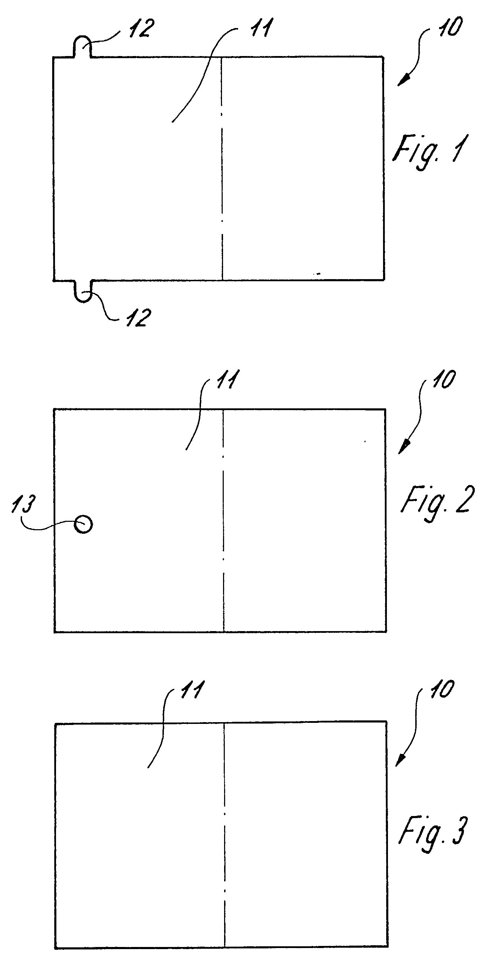

In den Figuren 1 - 3 ist übereinstimmend mit dem Bezugszeichen 10 ein Filterpapiereinsatz für ein Filtergefäß zur Herstellung von Aromaauszügen aus Kaffee oder Tee bezeichnet.

Gemeinsam ist allen Ausführungsbeispielen, daß der Filterpapiereinsatz 10 aus einem im Grundriß rechteckigen Blatt 11 besteht.

Dies ist herstellungstechnisch eine besonders einfache und praktisch abfallfrei herstellbare Form eines Filterpapiereinsatzs.

Der Filterpapiereinsatz 10 kann mit Arretierungsmitteln ausgestattet sein, beispielsweise kann ein Filterpapiereinsatz 10 mit über seinen Seitenrandbereich hinaus vorstehenden Laschen 12 ausgestattet sein.

Als Arretierungsmittel kann ein erfindungsgemäßer Filterpapiereinsatz 10 auch im Seitenrandbereich mit mindestens einem Durchbruch 13 ausgestattet sein.

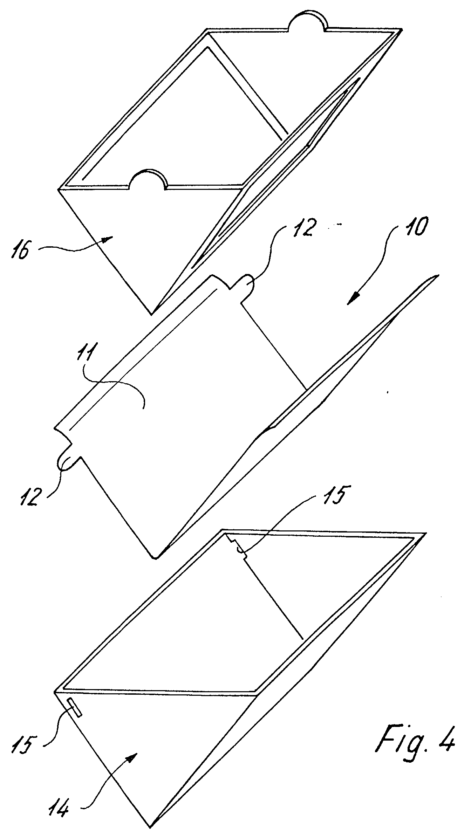

Figur 4 zeigt anschaulich die praktische Anwendung eines Filterpapiereinsatzes 10 nach dem Ausführungsbeispiel gemäß Figur 1.

In Figur 4 ist mit dem Bezugszeichen 14 ein Filtergefäß bezeichnet, in welches der Filterpapiereinsatz 10 eingesetzt wird. Dieses Filtergefäß 14 ist an seinen stirnseitigen Wänden mit Durchbrechungen oder Schlitzen 15 versehen, in welche die als Arretierungsmittel dienenden Laschen 12 des Filterpapiereinsatzes 10 eingebracht werden. Hierdurch ist der Filterpapiereinsatz 10 lagegerecht im Filtergefäß 14 positioniert.

Durch einen in das Filtergefäß 14 einklemmbaren Niederhalter 16 kann dann der Filterpapiereinsatz 10 zusätzlich festgeklemmt werden.

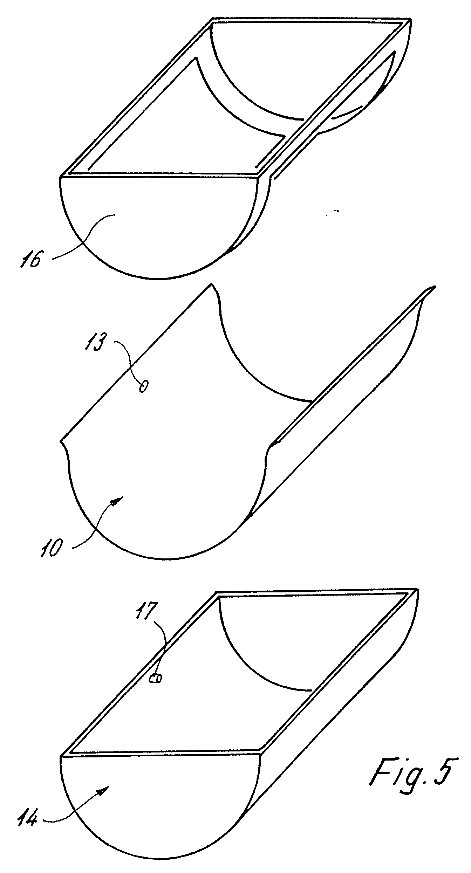

Eine ähnliche Anwendung zeigt das Ausführungsbeispiel gemäß Figur 5.

Hier ist das Filtergefäß 14 im Querschnitt etwa halbkreisförmig gestaltet und weist einen Arretierungsnocken 17 auf, der durch den Durchbruch 13 im Seitenrandbreich des Filterpapiereinsatzes 10 hindurchtritt, wenn dieser Filterpapiereinsatz 10 in das Filtergefäß 14 eingesetzt ist.

Durch einen der Querschnittsform des Filtergefäßes 14 angepaßten Niederhalter 16 kann dann der Filterpapiereinsatz 10 wieder eingeklemmt werden.

Beim Ausführungsbeispiek gemäß Figur 4 weist das Filtergefäß eine im Querschnitt dreieckige Form auf.

Abweichend von den dargestellten Ausführungsbeispielen kann ein Filterpapiereinsatz 10 in seinem Seitenrandbereich auch mit mindestens einer Aussparung ausgestattet sein, der dann innerhalb eines Filtergefäßes ein entsprechender Arretierungsnocken zuzuordnen wäre.

## Patentansprüche

1. Filterpapiereinsatz für ein Filtergefäß zur Herstellung von Aromaauszügen aus Kaffee oder Tee, **dadurch gekennzeichnet**, **daß** der Filterpapiereinsatz (10) aus einem im Grundriß rechteckigen Blatt (11) besteht.

2. Filterpapiereinsatz nach Anspruch 1, **dadurch gekennzeichnet, daß** das Blatt (11) in seinem Randbereich mit Arretierungsmitteln ausgestattet ist.

3. Filterpapiereinsatz nach Anspruch 2, **dadurch gekennzeichnet, daß** als Arretierungsmittel mindestens ein Durchbruch (13) vorgesehen ist.

4. Filterpapiereinsatz nach Anspruch 2, **dadurch gekennzeichnet**, daß als Arretierungsmittel mindestens eine über den Seitenrandbereich hinaus vorstehende Lasche (12) vorgesehen ist.

5. Filterpapiereinsatz nach Anspruch 2, **dadurch gekennzeichnet, daß** als Arretierungsmittel mindestens eine im Seitenrandbereich angebrachte Aussparung vorgesehen ist.
